# EUROPÄISCHE PATENTANMELDUNG

(11) **EP 2 230 057 A1**
(43) Veröffentlichungstag der Anmeldung: **22.09.2010**
(21) Anmeldenummer: 09003999.1
(22) Anmeldetag: 20.03.2009
(51) Int. Cl.: B28B 3/26, B30B 11/22

(54) **Mundstück**

(71) Anmelder: Ziegelmundstückbau Braun GmbH, 88048 Friedrichshafen (DE)
(72) Erfinder: Berger, Harald, 88690 Uhldingen-Mühlhofen (DE)
(74) Vertreter: Engelhardt, Volker

(57) **Zusammenfassung**

Bei einem Mundstück (1), das insbesondere zur Herstellung eines Hochlochziegelstranges (4) im Extrudierverfahren einsetzbar ist, bestehend aus einem Gestell (6) und aus einer Vielzahl von an dem Gestell (6) drehfest angebrachten Haltestangen (8), die im Inneren des Mundstückes (1) angeordnet und parallel zu der Fließrichtung (5) des Hochlochziegelstranges (4) ausgerichtet sind, und aus einem an der jeweiligen Haltestange (8) aufgesteckten Formkörper (10), durch den die Kanalgeometrie des Hochlochziegelstranges (4) gebildet ist, soll der Formkörper (10) verdrehfest an der Haltestange (8) angebracht sein. Dies wird dadurch erreicht, dass auf der der Austrittsöffnung (7) des Mundstücks (1) zugewandten Oberfläche des Formkörpers (10) jeweils eine Platte (11) angebracht ist, dass in die Platte (11) eine Aufnahmeöffnung (12) eingearbeitet ist, die mit dem freien Ende (9) der jeweiligen Haltestange (8) in dessen Umfangsrichtung kraftschlüssig verbunden ist; vgl. Figur 1.

## Beschreibung

Die Erfindung bezieht sich auf ein Mundstück nach dem Oberbegriff des Patentanspruches 1.

Derartige Mundstücke werden beispielsweise in Schneckenpressen zur Herstellung von Hochlochziegeln eingesetzt. Ein derartiges Mundstück kann beispielsweise der DE 101 20 632 A1 entnommen werden. Dabei sind an einem der Schneckepresse zugewandten Gestell eine Vielzahl von Haltestangen drehfest an dem Gestell angebracht. Die Haltestangen sind parallel zu der Fließrichtung der von der Schneckenpresse herangeführten Massen, beispielsweise Ton oder Keramik, ausgerichtet. Um die Kanäle und deren geometrische Ausgestaltung im Inneren des Hochlochziegels herzustellen, sind auf dem jeweiligen freien Ende der Haltestangen ein Formkörper dreh- und ortsfest angebracht. Dabei wird der Formkörper über eine Formschlussverbindung an der Haltestange befestigt.

Als nachteilig bei einer solchen Arretierung der Formkörper an der Haltestange hat sich herausgestellt, dass die Formkörper nicht zuverlässig gegen Verdrehen gesichert sind. Insbesondere wenn zwischen zwei benachbarten Formkörpern Ablagerungen, Verstopfungen oder dergleichen durch die Masse auftreten und diese mittels Stangen, Schraubendreher oder dergleichen herausgelöst werden, entstehen Kräfte, die auf die Formkörper einwirken und durch die diese um die Haltestangen verdreht werden.

Wenn jedoch die Formkörper in ihrer Ausrichtung bezogen auf die Fließrichtung der Masse verändert werden, entsteht ein Kanal, der nicht erwünscht ist, so dass der gesamte hergestellte Hochlochziegelstrang unbrauchbar wird.

Darüber hinaus ist nachteilig, dass zur Herstellung einer formschlüssigen Verbindung zwischen dem Formkörper und dem freien Ende der Haltestange besondere konstruktive Anforderungen an die Ausgestaltung der Außenfläche der Haltestange an die diese aufnehmende Innenfläche des Formkörpers zu stellen sind, um beispielsweise ein zuverlässiges Verspannen zu erreichen. Derartige konstruktive Maßnahmen sind jedoch kompliziert herzustellen und folglich kostenintensiv.

Es ist daher Aufgabe der Erfindung, ein Mundstück der eingangs genannten Gattung bereitzustellen, dessen Formkörper verdrehsicher an dem jeweiligen freien Ende der Haltestangen befestigt sind. Zudem soll die Herstellung der Formkörper und deren Fixierung an dem jeweiligen freien Ende der Haltestangen möglichst kostengünstig erfolgen.

Diese Aufgaben werden erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass auf der der Austrittsöffnung des Mundstückes zugewandten Oberfläche der Formkörper eine Platte angebracht ist, wird gewährleistet, dass mögliche auftretende Kräfte und Drehmomente nicht auf den Formkörper unmittelbar einwirken, sondern vielmehr über die Platte und die Haltestange aufgenommen werden.

Die erfindungsgemäße kraftschlüssige Wirkverbindung zwischen dem freien Ende der Haltestange und der den Formkörper abstützenden Platte ermöglicht zudem, dass eine hohe Passgenauigkeit erzielt wird, denn durch die konstruktive Ausgestaltung der kraftschlüssigen Verbindung zwischen der Haltestange und der Platte wird der Formkörper in seiner Position bezogen auf die Haltestange exakt ausgerichtet.

Dies führt dazu, dass die durch den Formkörper hergestellten Kanäle in dem Hochlochziegelstrang eine hohe Maßgenauigkeit aufweisen.

Da die Platte aus Metall gefertigt ist, kann in diese die kraftschlüssige Wirkverbindung in Form der Zähne exakt eingearbeitet werden. Derartige konstruktive Ausgestaltungen sind kostengünstig herzustellen. Auch die Einarbeitung der Einkerbungen in das freie Ende der Haltestangen erfolgt ohne große technische Aufwendungen und folglich entsteht ein exakter Passsitz, durch den der Formkörper nicht nur zuverlässig an der Haltestange abgestützt, sondern auch in der gewünschten Position zentriert ist.

In der Zeichnung ist ein erfindungsgemäßes Ausführungsbeispiel eines Mundstückes dargestellt, das nachfolgend näher erläutert ist. Im Einzelnen zeigt:
- Figur 1: ein Mundstück, das am Ende einer Schneckepresse im Extrudierverfahren zur Herstellung eines Hochlochziegelstranges aus einer keramischen Masse eingesetzt ist, im Schnitt,
- Figur 2: das Mundstück gemäß Figur 1, bestehend aus einem Gestell an dem drehfest eine Haltestange und an dessen freien Ende ein Formkörper befestigt ist, in vergrößerter Darstellung und
- Figur 3: die Haltestange entlang der Schnittlinie III-III gemäß Figur 2.

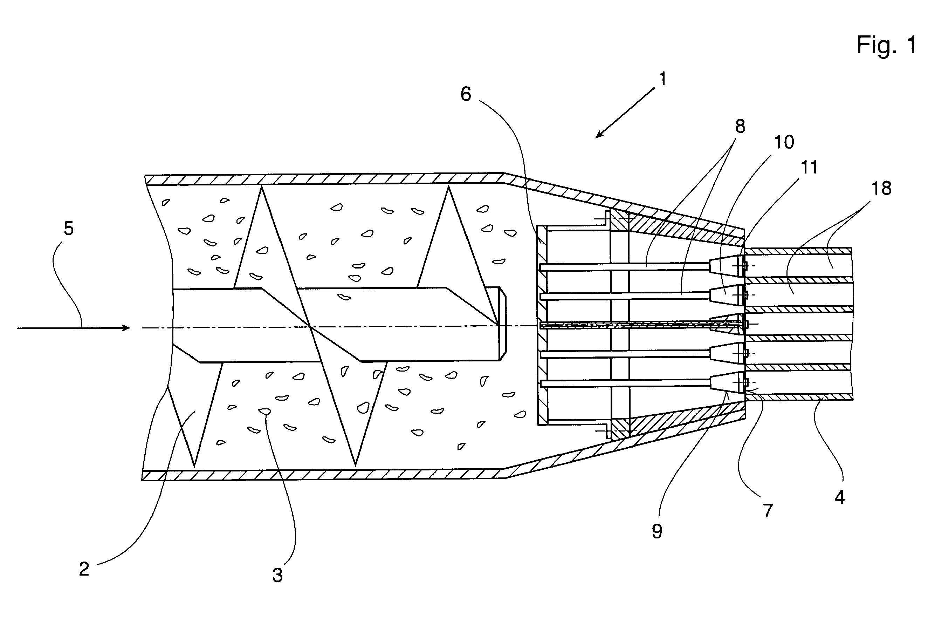

In Figur 1 ist gezeigt, dass durch eine Schneckepresse 2 keramische Masse 3 zu einem Mundstück 1 gefördert ist. Die Förderrichtung der Masse 3 ist dabei als Fließrichtung 5 bezeichnet. Die keramische Masse 3 wird durch das Mundstück 1 gepresst, um einen Hochlochziegelstrang 4 herzustellen. In dem Hochlochziegelstrang 4 sind fünf Kanäle 18 einzuformen. Ein solcher Herstellungsprozess ist als Extrudierverfahren bekannt.

Dabei besteht das Mundstück 1 aus einem der Schneckenpresse 2 zugewandten Gestell 6, an dem drehfest fünf Haltestangen 8 angebracht sind, die in Richtung der Austrittsöffnung 7 des Mundstückes 1 ausgerichtet sind. Darüber hinaus verlaufen die Haltestangen 8 parallel zu der Fließrichtung 5.

An dem freien Ende 9 der Haltestangen 8, also im Bereich der Austrittsöffnung 7 des Mundstückes 1, sind an der Haltestange 8 jeweils ein Formkörper 10, wie dies nachfolgend noch näher erläutert wird, befestigt. Durch die Formkörper 10 werden demnach die Kanäle 18 in dem Hochlochziegelstrang 4 geschaffen.

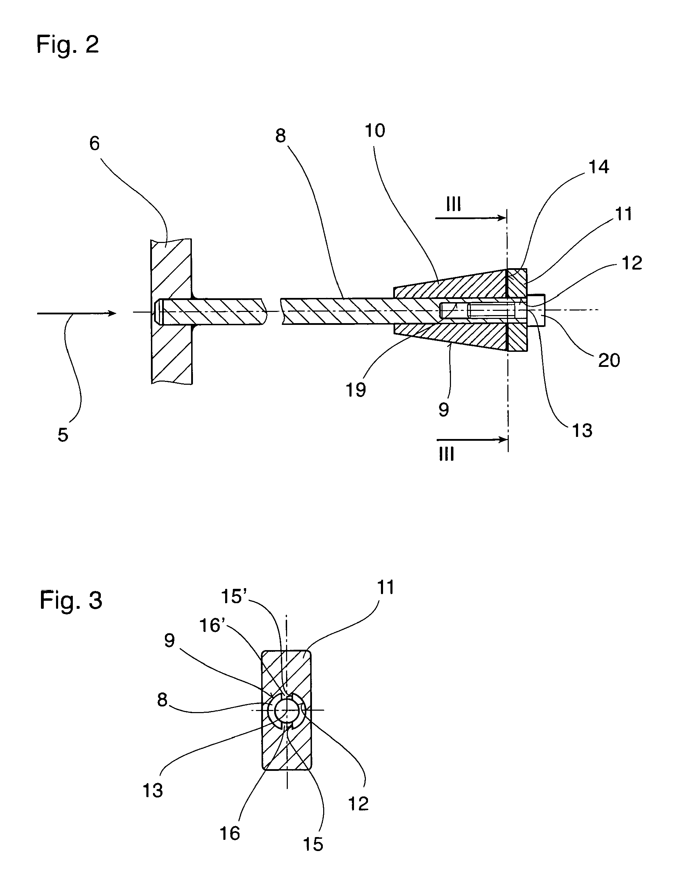

Die Befestigung der Formkörper 10 an dem freien Ende 9 der Haltestangen 8 kann den Figuren 2 und 3 entnommen werden. Die aus Keramik hergestellten Formkörper 10 weisen eine in Richtung der Austrittsöffnung 7 des Mundstückes 1 im montierten Zustand ausgerichtete Oberfläche auf, auf der mittels einer Klebeschicht 14 eine dünnwandige Platte 11 aus Metall, insbesondere aus Stahl, aufgebracht ist.

Die Formkörper 10 können auch aus Hartmetall, insbesondere Stahl oder Sintermetall, oder aus einem Grundkörper, der mit einer Keramik- oder Metallschicht überzogen ist, aufgebaut sein.

In die Haltestange 8 ist eine Gewindebohrung 19 eingearbeitet, so dass nach dem Aufstecken des Formkörpers 10 und der Platte 11 mittels einer Gewindeschraube 20 der Formkörper 10 und die Platte 11 an der Haltestange 8 befestigt sind, und durch die an dem Formkörper 10 und der Platte 11 vorbeiströmenden Masse 3 nicht heruntergezogen werden.

Um nunmehr den Formkörper 10 lageorientiert, also positionsgenau, bezogen auf die Haltestange 8 und die Fließrichtung 5, zu fixieren, sind in das freie Ende 9 der Haltestange 8 zwei diametral gegenüberliegende Einkerbungen 15 eingearbeitet. Diese Einkerbungen 15 sind in ihrem Querschnitt rechteckförmig ausgestaltet, so dass pro Einkerbung 15 jeweils zwei Flanken 15' geschaffen sind, die parallel zu der Haltestange 8 verlaufen.

In die Platte 11 ist in deren Zentrum 13 eine Aufnahmeöffnung 12 eingearbeitet. Des Weiteren ist die Aufnahmeöffnung 12 derart ausgestaltet, dass zwei diametral einander gegenüberliegende in das Zentrum 13 der Platte 11 ragende rechteckförmige Zähne 16 vorhanden sind. Die Außenkontur der Zähne 16 korrespondiert demnach mit der Innenkontur der Einkerbungen 15. Ferner stimmt die Lageorientierung der Einkerbungen 15 mit der Lageorientierung der Zähne 16 überein, so dass der Formkörper 10 zusammen mit der Platte 11 auf das freie Ende 9 der Haltestangen 8 aufgeschoben werden kann.

Die beiden Zähne 16 greifen demnach im montieren Zustand in die Einkerbungen 15 der Haltestangen 8 ein und werden in diesen kraftschlüssig gehalten, da sich die Flanken 16' der Zähne 16 an den beiden Flanken 15' der Einkerbungen 15 abstützen und nahezu spielfrei zwischen diesen gehalten sind, so dass ein Passsitz zwischen der Platte 11 und dem freien Ende 9 der Haltestange 8 geschaffen ist, durch den auch die Position des Formkörpers 10 auf der Haltestange 8 zentriert ist.

Ein solcher Passsitz führt zum Einen dazu, dass der Formkörper 10 über die Halteplatte 11 positionsgenau an der Haltestange 8 abgestützt ist. Zum Anderen werden auftretende Querkräfte, durch die ein Drehmoment erzeugt wird, über die kraftschlüssige Verbindung zwischen der Platte 11 und der Haltestange 8 aufgenommen, so dass eine Verdrehsicherung für den jeweiligen Formkörper 10 gegeben ist.

Die Querschnittsfläche der Einkerbungen 15 und der Zähne 16 kann auch halbkreis-, dreieck- oder trapezförmig ausgestaltet sein.

## Patentansprüche

1. Mundstück (1), das insbesondere zur Herstellung eines Hochlochziegelstranges (4) im Extrudierverfahren einsetzbar ist, bestehend aus einem Gestell (6) und aus einer Vielzahl von an dem Gestell (6) drehfest angebrachten Haltestangen (8), die im Inneren des Mundstückes (1) angeordnet und parallel zu der Fließrichtung (5) des Hochlochziegelstranges (4) ausgerichtet sind, und aus einem an der jeweiligen Haltestange (8) aufgesteckten Formkörper (10), durch den die Kanalgeometrie des Hochlochziegelstranges (4) gebildet ist,
**dadurch gekennzeichnet,**
**dass** auf der der Austrittsöffnung (7) des Mundstücks (1) zugewandten Oberfläche des Formkörpers (10) jeweils eine Platte (11) angebracht ist, dass in die Platte (11) eine Aufnahmeöffnung (12) eingearbeitet ist, die mit dem freien Ende (9) der jeweiligen Haltestange (8) in dessen Umfangsrichtung kraftschlüssig verbunden ist.

2. Mundstück nach Anspruch 1,
**dadurch gekennzeichnet,**
**dass** in die Aufnahmeöffnung (12) der Platte (11) ein oder mehrere in Richtung des Zentrums (13) der Aufnahmeöffnung (12) ausgerichtete Zähne (16) vorgesehen sind, und dass in das freie Ende (9) der jeweiligen Haltestange (8) eine mit der Querschnittsfläche des jeweiligen Zahnes (16) korrespondierende Einkerbung (15) eingearbeitet ist, in der der Zahn (16) im montierten Zustand eingreift.

3. Mundstück nach Anspruch 2
**dadurch gekennzeichnet,**
**dass** in das freie Ende (9) der jeweiligen Haltestange (8) zwei diametral gegenüberliegende Einkerbungen (15) eingearbeitet sind, in die jeweils einer der Zähne (16) der Platte (11) eingesetzt ist.

4. Mundstück nach Anspruch 2 oder 3
**dadurch gekennzeichnet,**
**dass** der jeweilige Zahn (16) eine rechteck-, dreieck-, trapez- oder halbkreisförmige Querschnittsfläche aufweist, und dass die Querschnittsflächen der Einkerbungen (15) an die jeweilige Querschnittsflächen der Zähne (16) derart angepasst sind, dass die Zähne (16) und die Einkerbungen (15) einen Passsitz bilden.

5. Mundstück nach einem der vorgenannten Ansprüche,
**dadurch gekennzeichnet,**
**dass** die Formkörper (10) aus Keramik, Metall oder Sintermetall und die Platte (11) aus Metall hergestellt sind oder dass die Formkörper (10) mit einer Schicht aus Keramik, Metall, Sintermetall, Hartchrom oder dgl. versehen sind.

6. Mundstück nach einem der vorgenannten Ansprüche,
**dadurch gekennzeichnet,**
**dass** in das jeweilige freie Ende (9) der Haltestange (8) eine Gewindebohrung (19) eingearbeitet ist und dass der jeweilige Formkörper (10) und die Platte (11) mittels einer Gewindeschraube (20) in der Gewindebohrung (19) der Haltestange (8) befestigt sind.

7. Mundstück nach einem der vorgenannten Ansprüche,
**dadurch gekennzeichnet,**
**dass** die Platte (11) mittels einer Klebeschicht (14) an dem Formkörper (10) befestigt ist.
